# EUROPEAN PATENT APPLICATION

(11) **EP 0 595 556 A1**
(43) Date of publication of application: **04.05.1994**
(21) Application number: 93308412.1
(22) Date of filing: 22.10.1993
(51) Int. Cl.: H04N 5/92

(54) **A high resolution image processing system using low resolution subimages**

(30) Priority: 28.10.1992 GB 9222658
(71) Applicant: QUANTEL LIMITED, Newbury Berkshire RG13 2LT (GB)
(72) Inventor: Kellar, Paul Roderick Noel, Newbury, Berkshire RG14 6QN (GB); Nonweiler, Brian Robert Gordon, Newbury, Berkshire RG13 (GB); Hinson, Neil Roy, Newbury, Berkshire (GB)
(74) Representative: Whitten, George Alan

(57) **Abstract**

An image processing system 1 comprises framestores 3, 4 and a disc store 6 connected via a buffer 11. The stores and the buffer are controlled by a processor 12. Image data representing an image at high resolution is moved between the stores in order to create sets of data representing respective sub images. Each sub image represents the entire image but at a lower resolution. The sub image data is recorded on video tape by a video recorder 17. This enables the sub image data to be transferred to low resolution processing apparatus for processing and/or display of the sub images thereby.

## Description

The invention relates to an image processing system.

Image processing systems are known in which data representing an image can be modified under user control in order to effect corresponding modifications to the image. One such system is disclosed in both GB-A-2089625 and US-A-4514818, the teachings of which are incorporated herein by reference. This known system includes a stylus and touch tablet device and is arranged to simulate painting or drawing in response to user manipulations of the stylus on the touch tablet. Data representing an image is held in an image store and is modified in response to manipulations of the stylus on the touch tablet. The data in the image store is continuously read for display of the image represented thereby on a monitor, thus enabling the user to see immediately the effect this manipulation of the stylus has on the image. This system can thus be used by the user to paint or draw an original image or to retouch or otherwise modify an existing image.

Another image processing system is disclosed in both GB-A-2113950 and US-A-4602286, the teachings of which are also incorporated herein by reference. This system can be configured to perform picture composition in addition to painting and to this end comprises several stores or areas of store for storing a foreground image, a background image and a key or stencil image. The system is arranged such that the foreground and background images are combined to produce a composite image under the control of the data defining the key or stencil image. The system further comprises an image data transformation processor which is responsive to user manipulations of the stylus on the touch tablet to effect zoom, pan, scroll, rotate and perspective changes to some or all of the stored images.

The above discussed image processing systems can be and indeed are used in a video editing or compositing system in which a foreground video clip is inserted into or otherwise combined with a background video clip to effect modifications to some or all of the image frames in each clip during the combining of the two clips. One such system is manufactured and sold by us under the trade mark "HENRY" and is described in our co-pending British patent application no. 9205503.1, the teachings of which are incorporated herein by reference.

The HENRY compositing system is well suited to editing television pictures which are at relatively low resolution but is not so suitable for editing film pictures which are at a much higher resolution. In order to satisfy the resolution requirements of film editors we manufacture and sell under the trade mark "DOMINO" an electronic film editing and compositing system which operates at the much higher resolutions associated with film. As the resolution of an image is increased the amount of data required to represent the image also increases together with the number of data processing tasks required to perform a given modification to the image. As a result, the cost of building a system also rises. For example the cost of our DOMINO compositing system is of the order of four to five times the cost of our HENRY compositing system. Clearly it is desirable to be able to keep the cost of such systems as low as possible but hitherto this has only been possible by sacrificing resolution by reducing the amount of data used to define an image.

The invention in one aspect provides an image processing system in which initial image data defining a multiplicity of picture elements which together represent at least one high resolution image is divided into groups each of which represents a sub image corresponding to the entire image at a lower resolution than that defined by the initial image data, and all of the groups of data are transferred to a video tape for storage thereon such that the data for each sub image can be retrieved from the video tap independently of the data for other sub images, thereby to enable processing of at least some of the sub images using low resolution processing apparatus.

In another aspect the invention provides a method of storing initial image data defining a multiplicity of picture elements which together represent at least one high resolution image, the method comprising dividing the data into groups each of which represents a sub image corresponding to the entire image at a lower resolution than that defined by the initial image data, and transferring all of the groups of data to a video tape for storage thereon such that the data for each sub image can be retrieved from the video tape independently of the data for other sub images, thereby to enable processing of at least some of the sub images using low resolution processing apparatus.

The invention also provides an image processing apparatus comprising a storing means for storing initial image data defining a multiplicity of picture elements which together represent at least one high resolution image, processing means for processing the initial image data by dividing the same into groups each of which represents a sub image corresponding to the entire image at a lower resolution than that defined by the initial image data, and tape recording means connected to said processing means for recording all of the groups of data such that the data for each sub image can be retrieved from the video tape independently of the data for other sub images.

Furthermore, the invention provides an image processing system comprising: means for providing images of a moving scene as a series of image frames each comprising an array of lines and columns of digital signals representative of picture elements of the image frame from which they derive, a plurality of frame storing means for storing respective integral fractions of the digital signals of each frame, each such fraction comprising a lower resolution representation of the whole of the frame from which it is derived, switching means for distributing the digital signals comprising each image frame amongst the frame storing means, and video tape recording means for serially recording the image data from each frame store.

The above and further features of the invention together with advantages thereof will become clearer from consideration of the following detailed description of an exemplary embodiment of the invention given with reference to the accompanying drawings.

In the drawings:
Figure 1 is a schematic block diagram of a system embodying the invention;
Figure 2 illustrates data forming an image frame;
Figure 3 illustrates the way in which the image frame data is distributed among several stores;
Figure 4 illustrates the way in which the image frame data is further divided before being recorded.

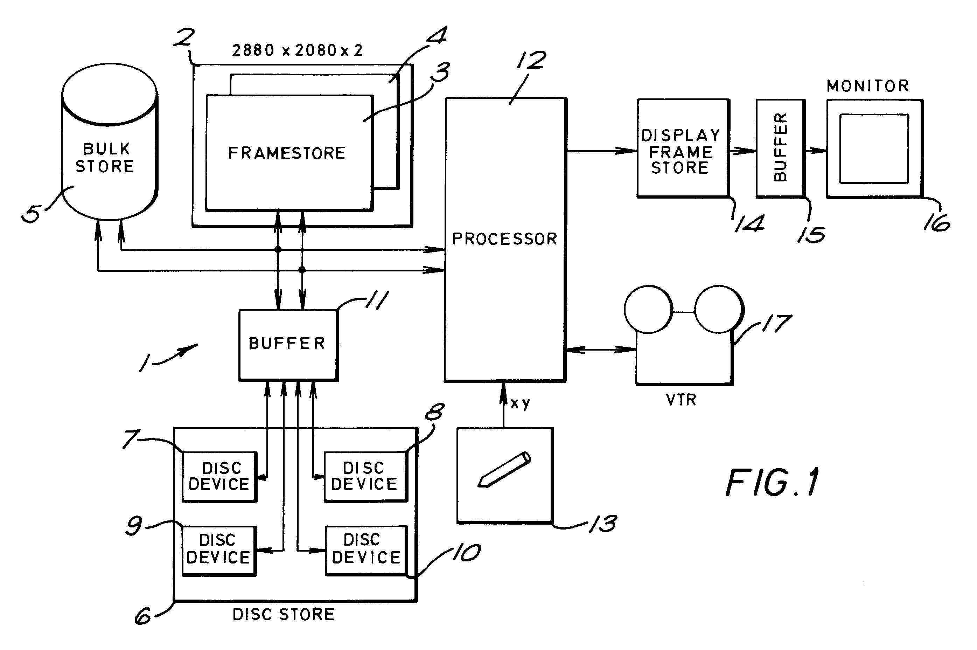

Referring now to Figure 1 of the accompanying drawings, an image processing system 1 comprises an image store 2 which includes at least two individual framestores 3, 4 each comprising 2880 x 2080 storage locations with each storage location being capable of storing twenty four bit image data. Each framestore 3, 4 thus has sufficient storage locations to store data defining 2880 pixels by 2080 lines in for example RGB (Red, Green, Blue) or YUV (luminance and chrominance) format which data together represent a single image frame at film quality resolution.

The system 1 further comprises a bulk store 5 for off-line storage of a large number of image frames corresponding to one or more film clips and a disc store 6 comprising several independent disc store devices 7 to 10 which are used in co-operation with the framestores 3, 4 in the processing of image data. The disc store 6 is connected to the framestores 3, 4 and the bulk store 5 via a buffer 11 which, as will be explained in greater detail hereinafter, controls the manner in which data representing an image frame from either the image store 2 or the bulk store 5 is stored in the disc store devices 7 to 10. Data may be loaded to the bulk store 5 from any suitable source. For example a series of image frames which together form a film clip may be scanned into the bulk store 5 using one of the many proprietary scanners (not shown) which are widely used in the film industry to convert image frames into electronic data.

The transfer of data between the bulk store 5 the framestores 3, 4 and the disc store 6 is controlled by a processor 12. The processor 12 is configured to provide both a control and supervisory operation and a data processing operation. In the supervisory operation the processor 12 controls the transfer of image data around the system 1 for example from the bulk store 5 to the disc store 6. In its data processing operation the processor 12 effects modifications to image data in response to user manipulations of a stylus and touch tablet device 13. The stylus and touch tablet device 13 outputs position signals XY relating to the position of the stylus in relation to the touch tablet when the stylus is brought into the proximity of the touch tablet. When the stylus is brought into contact with the touch tablet a signal (not shown) relating to the pressure applied by the stylus is also output from the stylus/touch tablet device 20. The position signals XY and the pressure signal are delivered to the processor 12.

In this data processing mode the operator is free to choose from a wide range of painting and other image modifying functions which are predefined in the systems. For example, the operator may select a brush from a range of predefined painting implements and may select a colour to paint with the brush. The selected brush may then be used to retouch part of an image frame held in the image store 2 with the selected colour. This is achieved by making the processor 12 responsive to the stylus and touch tablet to perform a read-modify-write operation on the selected frame data held in the store 2. Thus the processor 12 simulates painting or drawing in a similar manner to that disclosed in our above mentioned British patent application no. GB-A-2089625.

The system 1 comprises a display framestore 14 which is continually updated by the processor 12 with data from the framestore 3, 4 containing the image currently undergoing modifications. Data in the display framestore 14 is read continuously therefrom in raster order by a buffer 15 for display of the image on a high definition monitor 16. Typically a high definition (HD) monitor has a resolution of about one quarter that of the electronic data representing the film image. In other words, the HD monitor 16 is able to display an image represented by 1440 pixels by 1040 lines. The display framestore 14 is therefore one quarter the size of each of the framestores 3, 4. Since the display framestore 14 has a resolution of one quarter that of each of the framestores 3, 4 the processor 12 is arranged to be transparent to only every other pixel in each line and every other line of pixels from the framestore 3 or 4 so that in effect every second pixel in both the horizontal and vertical direction is dropped from the picture before it is displayed on the HDTV monitor 16.

The system 1 also comprises a digital video tape recorder 17 for storing in digital form data representing selected image frames. The recorder 17 stores data in component digital form, for example in accordance with the so-called D1 standard. The purpose of the recorder 17 will become clear from the following description of the remaining drawings.

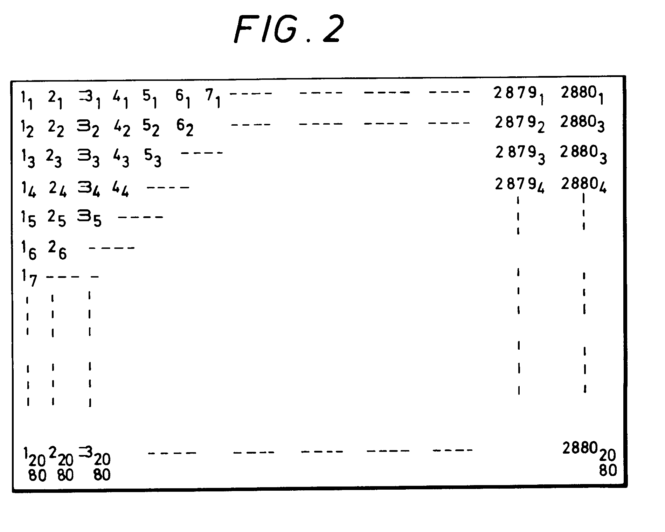

As shown in Figure 2 of the accompanying drawings a single high resolution image frame (such as an image frame held in one of the framestores 3, 4) comprises an array of picture elements starting in the top left hand corner with the first pixel in the first row, pixel 1₁, and finishing in the bottom right hand corner with the 2880th (last) pixel in the 2080th (last) row, picture element 2880₂₀₈₀.

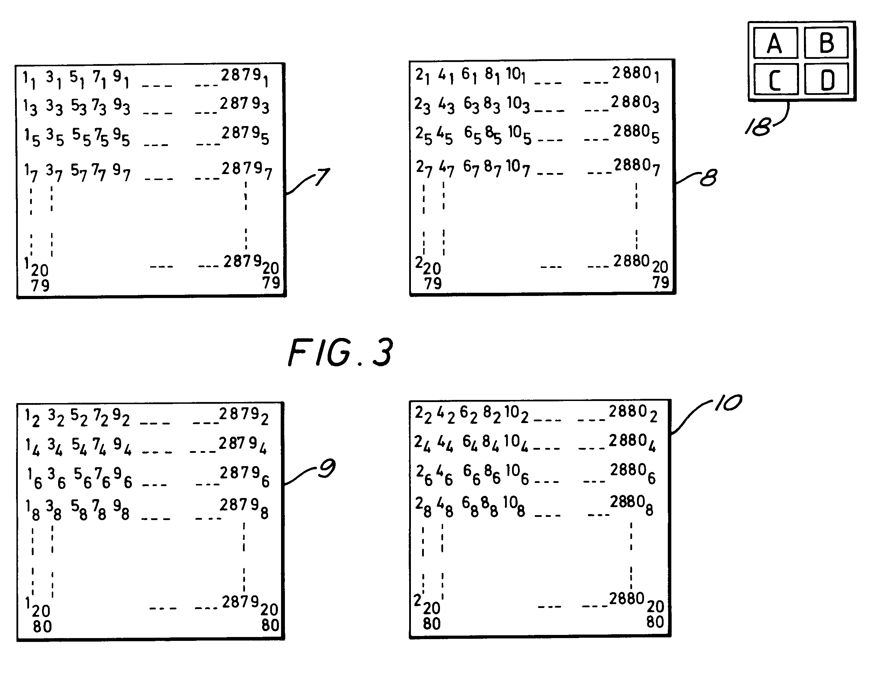

Once an image frame has been transferred to the image store 2, and following any painting or drawing operations that may have been performed for example to retouch the image, it is divided down into sub-images for storage at ordinary television resolution (e.g. 720 pixels by 520 lines) at the recorder 17. The image is broken down into sub images in a multi-stage operation. Firstly the image data from one of the framestores in the image store 2, say framestore 3, is written to buffer 11 which distributes the pixels among the disc devices 7 to 10 in the disc store 6. The manner in which the pixel data is distributed among the disc devices will be described with reference to Figure 3 of the accompanying drawings.

Pixel data is read from the framestore 3 a line at a time and the buffer 11 supplies odd numbered lines of pixel data to two of the disc devices, say devices 7 and 8, and even numbered lines of data to the other two disc devices 9 and 10. The buffer 11 is further arranged to alternate between disc devices on a pixel by pixel basis so that one device in each pair of devices, say devices 7 and 9, receive odd numbered pixels in each respective line and devices 8 and 10 receive even numbered pixels. Thus, disc device 7 receives all odd numbered pixels in all odd numbered lines and therefore the data in disc device 7 represents the whole image but at a quarter of the resolution of the initial image date. Likewise the disc devices 8 to 10 receive respective data which represents the whole image at a quarter resolution (1440 x 1040 pixels). An icon 18 is shown in the top right hand corner of Figure 3 and represents the data in the four disc devices 7 to 10 as four quarter-resolution images A, B, C and D respectively and these letters will be used hereinafter to identify the four quarter-resolution images.

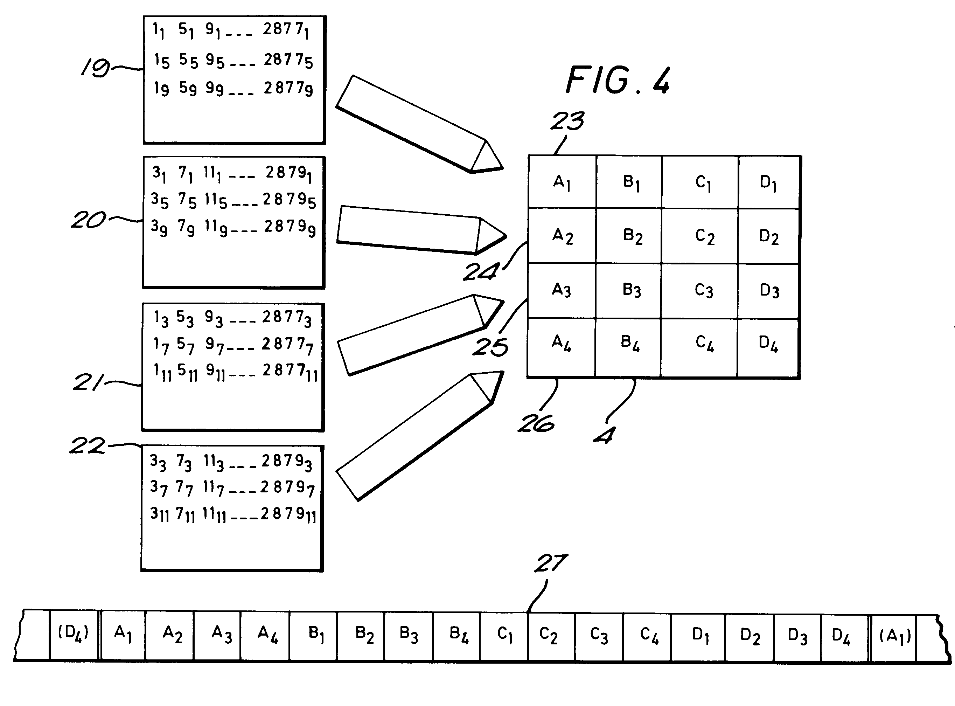

Once the four quarter-resolution images A, B, C and D have been written to their respective disc devices the processor 12 causes the disc store 6 and buffer 11 to write the data back to the other of the two framestores in the image store 12, i.e. framestore 4. As data for each of the images A to D is written to the framestore 4 it is again divided into subgroups of data before being stored in the framestore 4. As is shown in Figure 4 of the accompanying drawings, the data for each quarter-resolution image A to D is again divided to form four sub groups of data 19 to 22 by arranging for alternate lines of the image, for example image A, to be written to respective pairs of areas in the framestore, i.e. areas 23, 24 or 25, 26, and alternate pixels in each line of the image to be written to respective pairs of areas, i.e. areas 23, 25 or 24, 26, in the framestore 4. Thus, framestore area 23 contains sub-group 19 of the image data which sub-group comprises pixels 1, 5, 9, 13, etc. of lines 1, 5, 9, 13, etc. of the initial image data (as shown in Figure 2 of the drawings). Similarly, framestore area 24 contains image data subgroup 20 which comprises pixels 3, 7, 11, 15, etc. of lines 1, 5, 9, 13 etc. Each image data sub-group 19 to 22 contains data representing the whole image but at a resolution corresponding to a quarter of that of the data of images A to D, or a sixteenth of that of the initial image data. Thus, each data sub-group 19 to 22 represents a respective sub image A₁, A₂, A₃, A₄ comprising 720 pixels by 520 lines. The data for the other quarter resolution images B to D are likewise divided into four sub-images B₁ to B₄, C₁ to C₄ and D₁ to D₄ respectively, the data for each sub-image being held in a respective area of the framestore 4 as shown in Figure 4 of the accompanying drawings.

Each of the sub images A₁ to D₄ is of a resolution suitable for display on a television of standard resolution (i.e. not high definition) or for recording on video tape using a standard resolution video recorder. The sub images A₁ to D₄ are read from the framestore in order by the processor 12 and output to be recorded a sub image at a time on video tape 27 by the video recorder 17, as shown in Figure 4 of the accompanying drawings.

Once a full frame of data has been transferred from the framestore 3 to the disc store 6, as described above, a new frame of data representing the next frame in the film clip is loaded into the framestore 3. Likewise, once the data of the four quarter-resolution images has been output from the disc devices for storage as sub images in the framestore 4, the new frame of data can be transferred to the disc store 6. In other words the system is arranged to perform operations concurrently in order to speed up the rate at which data is moved around the system. In this way the system 1 is well able to transfer the sub images to the video recorder at ordinary video rates (typically 13.5 MHz) and the only limiting factor is the speed of the recorder, which is in any case fixed. This procedure is repeated until all image frames in the film clip have been transferred as groups of sixteen sub images to the tape recorder 17. The tape can then be removed from the recorder 17 and transferred to a similar video recorder in a video editing system such as our HENRY video editing and compositing system for manipulation of the sub images thereby. Since each of the sub images is recorded in a format such as D1, data for each sub image can be read directly from the tape during manipulation and/or display of each sub image.

It will be appreciated that the system 1 is also configurable so that sub images from the tape can be re-assembled to form a corresponding single high resolution image. In this mode of operation sub image data are read from the tape 27 via the processor 12 and stored in one of the framestores, say framestore 4. The reverse procedure to that described hereinabove may be employed in reconstituting the high resolution image, i.e. sub images written to framestore 4 are then transferred to the disc store 6 via buffer 11 which writes the data in the disc devices 7 to 10 such that each device contains data for a quarter- resolution image, and the quarter-resolution image data is then written to the framestore 3 so as to define the single high resolution image. The reconstituted high resolution image data can then be transferred to the bulk store 5. Again the operations can be performed concurrently on data for different images in order to increase the rate of data transfer.

It will be appreciated that if sufficiently fast framestores are available the disc store need not be used. The framestores are random access devices and locations therein could be addressed in a suitable order to cause data to be output directly in the form of sub images A₁ to D₄, as described hereinabove, for recording by the video tape recorder 17. The system would be arranged so that one framestore was receiving new image data from the bulk store whilst the data in the other framestore was being read for output to the recorder 17. A similar procedure in reverse could be adopted during the reconstitution of a high resolution image from a set of low resolution sub images.

The above described system 1 offers several advantages. Each sub image is a low resolution representation of the whole image and the data is stored in a standard format in which it can be read directly for display of at least some of the sub images on a monitor and/or for modification of the data. This does away with the need for expensive circuitry for decoding the data to place it into the correct form for manipulation or display of the images. Therefore, the system 1 enables the initial high resolution image to be processed using low resolution processing apparatus without any substantial loss in image formation or content.

All of the data representing the high resolution image is available on the tape but in more easily handleable packages, i.e. the sixteen sub images. The sub images can each be manipulated by standard video editing equipment to produce modified sub images which are again recorded on digital video tape. By placing the data representing the high resolution image on tape in the form of a set of sub images the data can be readily transported elsewhere for use in other equipment which might even be located at another site in another part of the country. Since the data for each sub image is stored on the tape in a standard format it is immediately readable by a wide range of equipments made by different manufacturers and capable of achieving a whole host of different operations. The user is therefore not restricted to using equipment supplied by a single manufacturer. Thus, it is possible to effect any of a wide range of different transformations and other special effects to a high resolution image using normal television resolution equipment without any loss in picture quality. The desired transformation or other effect is simply applied to all of the sub images relating to a given one high resolution image in a substantially identical manner so that when the high resolution image is re-composed it too will have undergone this desired transformation.

Much of the above discussion has concentrated on the processing of a single high resolution image frame. It should not be forgotten that in practice the image will in fact be one of many high resolution image frames which together comprise one or more high resolution film clips which have been scanned frame by frame to the bulk store 5. Thus it will be appreciated that two or more high resolution film clips may also be combined using ordinary television resolution image compositing or editing equipment simply by supplying each clip as corresponding sequences of sub images on respective video tapes to a television editor or compositor. The resulting combined clip is recorded onto video tape as a sequence of combined sub images which are subsequently re-composed as a high resolution combined film clip.

It should be noted that when the tape containing a clip defined by sub images is played back at normal speed movement in the clip will appear slowed down to one sixteenth of its correct speed. This is because during playback the image of one frame is displayed sixteen times, once for each sub image. Most editing systems have a high speed display facility and this can be used by the user of the system to reduce the slow motion effect caused by the multiple sub images.

Having thus described the present invention by reference to a preferred embodiment it is to be well understood that the embodiment in question is exemplary only and that modifications and variations such as will occur to those possessed of appropriate knowledge and skills may be made without departure from the spirit and scope of the invention as set forth in the appended claims and equivalents thereof.

## Claims

1. An image processing system in which initial image data defining a multiplicity of picture elements which together represent at least one high resolution image is divided into groups (A₁ to D₄) each of which represents a sub image corresponding to the entire image at a lower resolution than that defined by the initial image data, and all of the groups of data are transferred to a video tape (17) for storage thereon such that the data for each sub image can be retrieved from the video tape independently of the data for other sub images, thereby to enable processing of at least some of the sub images using low resolution processing apparatus.

2. A system as claimed in claim 1, wherein the initial image data defines said multiplicity of picture elements in a multiplicity of image lines, and even and odd numbered pixels in each line together with even and odd numbered lines respectively in the or each image contribute to different data groups.

3. A system as claimed in claim 2, wherein alternate odd numbered pixels of said image lines contribute to respective different data groups and alternate even numbered pixels of said image lines contribute to respective different data groups.

4. A system as claimed in claim 2 or 3, wherein alternate odd numbered lines contribute to respective different data groups and alternate even numbered lines contribute to respective different data groups.

5. A system as claimed in any preceding claim, wherein each sub image is represented by pixels defined at standard television resolution.

6. A system as claimed in any preceding claim, wherein the data for each sub image is stored on the video tape in a format that facilitates display of the image on a monitor (16).

7. A method of storing initial image data defining a multiplicity of picture elements which together represent at least one high resolution image, the method comprising dividing the data into groups (A₁ to D₄) each of which represents a sub image corresponding to the entire image at a lower resolution than that defined by the initial image data, and transferring all of the groups of data to a video tape for storage thereon such that the data for each sub image can be retrieved from the video tape (17) independently at the data for other sub images, thereby to enable processing of at least some of the sub images using low resolution processing apparatus.

8. A method as claimed in claim 7, wherein the initial image data defines said multiplicity of picture elements in a multiplicity of image lines, and even and odd numbered pixels in each line together with even and odd numbered lines respectively in the or each image contribute to different data groups.

9. A method as claimed in claim 8, wherein alternate odd numbered pixels of said image lines contribute to respective different data groups and alternate even numbered pixels of said image lines contribute to respective different data groups.

10. A method as claimed in claim 8 or 9, wherein alternate odd numbered lines contribute to respective different data groups and alternate even numbered lines contribute to respective different data groups.

11. A method as claimed in any of claims 7 to 10, wherein each sub image is represented by pixels defined at standard television resolution.

12. A method as claimed in any of claims 7 to 11, wherein the data for each sub image is stored on the video tape in a format that facilitates display of the image on a monitor (16).

13. A method as claimed in any of claims 7 to 12, wherein data for all of the sub images is retrieved for processing.

14. An image processing apparatus comprising a storing means (2) for storing initial image data defining a multiplicity of picture elements which together represent at least one high resolution image, processing means (12) for processing the initial image data by dividing the same into groups (A₁ to D₄) each of which represents a sub image corresponding to the entire image at a lower resolution than that defined by the initial image data, and tape recording means (17) connected to said processing means (12) for recording all of the groups of data such that the data for each sub image can be retrieved from the video tape independently of the data for other sub images.

15. An apparatus as claimed in claim 14, wherein the storing means comprises a first frame storing means (3) for storing data representing one high resolution image, the storing means receiving data from an image source (5).

16. An apparatus as claimed in claim 15, wherein the image source comprises a bulk image store (5) for storing data representing a plurality of high resolution images which can be selectively transferred to the first frame storing means.

17. An apparatus as claimed in claim 15 or 16, wherein the storing means comprises a disc storing means (6) connected to the first frame storing means via a buffer (11), the processing means (12) being arranged to control the storing means such that in use as data is transferred from the first frame storing means (3) to the disc storing means (6) the data is divided into intermediate groups each of which represents an intermediate image corresponding to the entire image at an intermediate resolution.

18. An apparatus as claimed in claim 17, wherein the disc storing means comprises a plurality of disc devices (7 to 10) and each intermediate image is stored in a respective disc device.

19. An apparatus as claimed in claim 17 or 18, wherein the storing means comprises a second frame storing means (4) connected to the disc storing means (6) via the buffer (11), the processing means (12) being arranged to control the storing means such that in use as each intermediate data group is transferred from the disc storing means (6) to the second frame storing means (4) the data is divided into groups each representing a respective one of said sub images, each group being stored in a respective area of the second frame storing means (4).

20. An apparatus as claimed in any of claims 14 to 19, further comprising user operable input means (13), the processing means (12) being responsive to said input means (13) to effect user selected modifications to image data in said storing means.

21. An apparatus as claimed in any of claims 14 to 20, further comprising a displaying means (16) for displaying the image represented by data in said storing means.

22. An image processing system comprising: means (5) for providing images of a moving scene as a series of image frames each comprising an array of lines and columns of digital signals representative of picture elements of the image frame from which they derive, a plurality of frame storing means (3,4) for storing respective integral fractions of the digital signals of each frame, each such fraction comprising a lower resolution representation of the whole of the frame from which it is derived, switching means (11) for distributing the digital signals comprising each image frame amongst the frame storing means, and video tape recording means (17) for serially recording the image data from each frame store.
